# EUROPEAN PATENT SPECIFICATION

(11) **EP 3 529 525 B1**
(45) Date of publication and mention of the grant of the patent: **01.12.2021**
(21) Application number: 17794829.6
(22) Date of filing: 18.10.2017
(51) Int. Cl.: F16L 15/00, F16L 19/00, F16B 33/02, F16B 7/06, F16B 7/18

(54) **SYSTEM HAVING PRESSURIZED FLUID FLOWING THERETHROUGH COMPRISING A COUPLING NUT**
VON EINEM UNTER DRUCK STEHENDEM FLUID DURCHSTRÖMTES SYSTEM AUFWEISEND EINE KUPPLUNGSMUTTER
SYSTÈME DANS LEQUEL CIRCULE UN FLUIDE SOULS PRESSION COMPRENANT UN ÉCROU DE COUPLAGE

(30) Priority: 18.10.2016 US 201662409823 P
(43) Date of publication of application: 28.08.2019
(73) Proprietor: Carrier Corporation, Jupiter, FL 33458 (US)
(72) Inventor: PENDEN, Karl Fredrik, Ashland MA 01721 (US)
(74) Representative: Dehns
(86) International application number: PCT/US2017/057239
(87) International publication number: WO 2018/075672

(56) References cited:
- WO-A2-2008/039456
- WO-A2-2016/130021
- DE-A1- 4 414 256
- US-A- 581 050

## Description

### FIELD OF THE DISCLOSED EMBODIMENTS

The present embodiments generally relate to a coupling nut and, more particularly, a coupling nut for a system having pressurized fluid flowing therethrough.

### BACKGROUND OF THE EMBODIMENTS

Generally, systems that are configured to move pressurized fluid therethrough often include conduits that are coupled together. These conduits are required to be secured with a coupling nut so that the conduits do not separate under pressure. In some cases, the coupling nut used to join the conduits can be threaded leaving few threads engaged on one of the conduits. This can result in one of the conduits separating from the coupling nut under pressure.

WO 2016/130021 A2 and WO 2008/039456 A2 disclose examples of mechanical connector assemblies for joining pipes.

A need remains for a coupling nut that prevents either of the conduits from being threaded too shallow into the coupling nut.

### SUMMARY OF THE EMBODIMENTS

In one aspect, a system having pressurized fluid flowing therethrough is provided, as recited in claim 1. The system includes a component having a first conduit. The component discharges pressurized fluid through the first conduit. The first conduit includes a first conduit threaded end having a first length. A second conduit includes a second conduit threaded end having a second length. A coupling nut is constructed and arranged to join the first conduit and the second conduit. The coupling nut includes a first end and a second end. An opening extends between the first end and the second end. The opening has an interior surface. A first coupling nut thread extends along the interior surface at the first end and is constructed and arranged to receive the first conduit threaded end. A second coupling nut thread extends along the interior surface at the second end and is constructed and arranged to receive the second conduit threaded end. A non-threaded central portion extends between the first coupling nut thread and the second coupling nut thread. The non-threaded central portion has a third length. The third length of the non-threaded central portion is less than the sum of the first length of the first conduit threaded end and the second length of the second conduit threaded end. If the first conduit is inserted into the coupling nut too far, the first conduit threaded end will become positioned within the non-threaded central portion of the coupling nut so that the first conduit will rotate freely with respect to the coupling nut; and/or if the second conduit is inserted into the coupling nut too far, the second conduit threaded end will become positioned within the non-threaded central portion of the coupling nut so that the second conduit will rotate freely with respect to the coupling nut.

The third length is greater than the first length.

The third length is greater than the second length.

In one embodiment, the first length is equal to the second length.

In one embodiment, the first coupling nut thread is threaded in an opposite direction of the second coupling nut thread.

In one embodiment, the first coupling nut thread comprises a right-hand thread, and the second coupling nut thread comprises a left-hand thread.

In one embodiment, the first coupling nut thread comprises a left-hand thread, and the second coupling nut thread comprises a right-hand thread.

### BRIEF DESCRIPTION OF THE DRAWINGS

The embodiments and other features, advantages and disclosures contained herein, and the manner of attaining them, will become apparent and the present disclosure will be better understood by reference to the following description of various exemplary embodiments of the present disclosure taken in conjunction with the accompanying drawings, wherein:
FIG. 1 is a schematic view of a system in accordance with an embodiment.
FIG. 2 is a cross-sectional view of a coupling nut in accordance with an embodiment.
FIG. 3 is a cross-sectional view of a coupling nut in accordance with an embodiment.
FIG. 4 is a cross-sectional view of a coupling nut having a conduit coupled thereto in accordance with an embodiment.
FIG. 5 is a cross-sectional view of a coupling nut having a conduit coupled thereto in accordance with an embodiment.

### DETAILED DESCRIPTION OF THE EMBODIMENTS

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended.

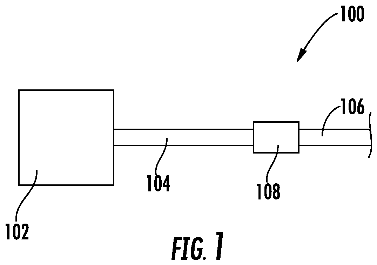

FIG. 1 illustrates a system 100 having pressurized fluid flowing therethrough. In one embodiment, the system 100 may be a fire suppression system 100. The system 100 includes at least one component 102 that is constructed and arranged to pressurize a fluid. For example, the component 102 may be a pump, a pressurized container, or the like. A first conduit 104 extends from the component 102. The first conduit 104 is coupled to a second conduit 106 via a coupling nut 108. The second conduit 106 may be coupled to another component of the system 100.

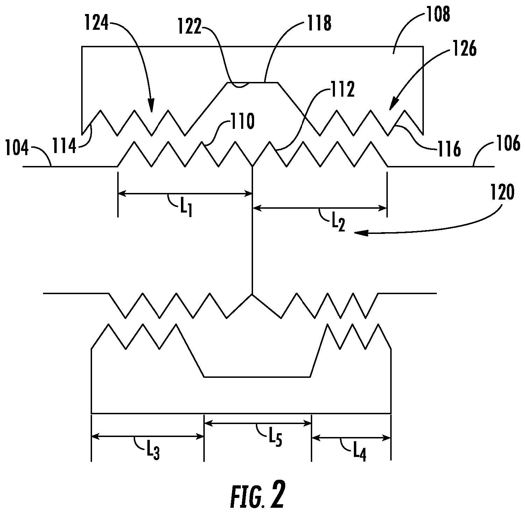

FIG. 2 illustrates the first conduit 104 coupled to the second conduit 106 via the coupling nut 108. The first conduit 104 includes a first conduit threaded end 110, and the second conduit 106 includes a second conduit threaded end 112. In one embodiment, the first conduit threaded end 110 may include a right-handed thread, and the second conduit threaded end 112 may include a left-handed thread. In one embodiment, the first conduit threaded end 110 may include a left-handed thread, and the second conduit threaded end 112 may include a right-handed thread. In one embodiment, both of the first conduit threaded end 110 and the second conduit threaded end 112 include the same threading, i.e. right-handed or left-handed. The first conduit threaded end 110 has a length L₁. The second conduit threaded end 112 has a length L₂. In one embodiment, the length L₁ is equal to the length L₂. In one embodiment, the length L₁ is not equal to the length L₂.

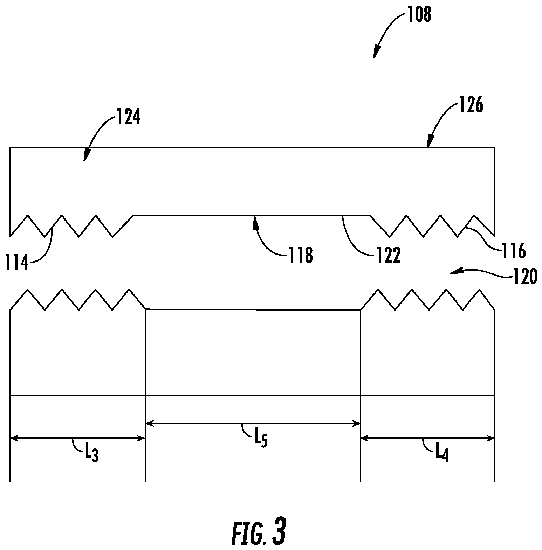

The coupling nut 108, illustrated in FIG. 3, includes a first end 124 and a second end 126. An opening 120 extends between the first end 124 and the second end 126 and has an interior surface 122. The coupling nut 108 includes a first threaded portion 114 and a second threaded portion 116. A non-threaded central portion 118 extends between the first threaded portion 114 and the second threaded portion 116. The first threaded portion 114 includes a thread on the interior surface 122 of the first end 124 that is configured either right-handed or left-handed to correspond to the thread of the first conduit threaded end 110. The second threaded end includes a thread on the interior surface 122 of the second end 126 that is configured either right-handed or left-handed to correspond to the thread of the second conduit threaded end 112. Accordingly, the first conduit 104 is configured to be coupled to the first threaded portion 114 of the coupling nut 108 to secure the first conduit 104 to the coupling nut 108. Also, the second conduit 106 is configured to be coupled to the second threaded portion 116 of the coupling nut 108 to secure the second conduit 106 to the coupling nut 108.

In one embodiment, the first threaded portion 114 of the coupling nut 108 has a length L₃, and the second threaded portion 116 of the coupling nut 108 has a length L₄. The non-threaded central portion 118 has a length L₅. In one embodiment, the length L₃ of the first threaded portion 114 of the coupling nut 108 is substantially equal to the length L₁ of the first conduit threaded end 110. In one embodiment, the length L₄ of the second threaded portion 116 of the coupling nut 108 is substantially equal to the length L₂ of the second conduit threaded end 112.

The length L₁ of the first threaded portion 104 is less than the length L₅ of the non-threaded central portion 118, and the length L₂ of the second threaded portion 106 is less than the length L₅ of the non-threaded central portion 118. The combined length of the length L₁ of the first threaded portion 104 and the length L₂ of the second threaded portion 106 is greater than the length L₅ of the non-threaded central portion 118.

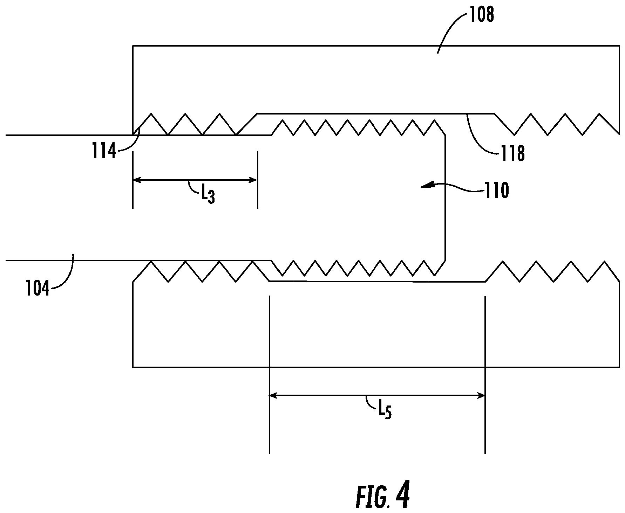

As illustrated in FIG. 4, if the first conduit 104 is inserted into the coupling nut 108 too far, the first conduit threaded end 110 will become positioned within the non-threaded central portion 118 of the coupling nut 108 so that the first conduit 104 will rotate freely with respect to the coupling nut 108. This is due to the length L₅ of the non-threaded central portion 118 being greater than the length L₁ of the first threaded portion 110 of the first conduit 104.

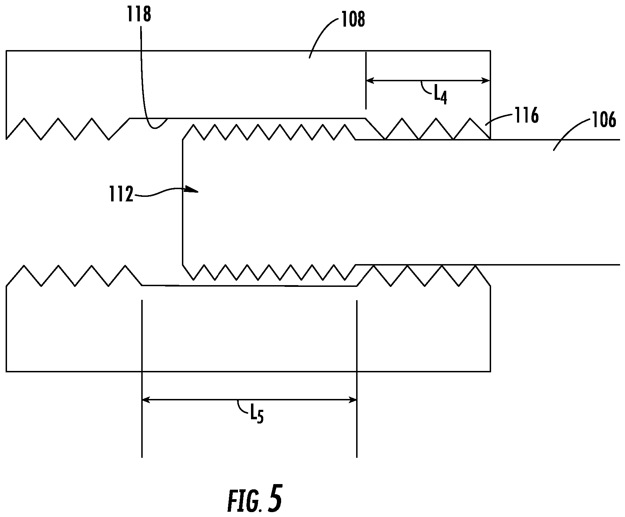

Moreover, as illustrated in FIG. 5, if the second conduit 106 is inserted into the coupling nut 108 too far, the second conduit threaded end 112 will become positioned within the non-threaded central portion 118 of the coupling nut 108 so that the second conduit 106 will rotate freely with respect to the coupling nut 108. This is due to the length L₅ of the non-threaded central portion 118 being greater than the length L₂ of the threaded portion 112 of the second conduit 106.

However, because the length L₁ of the first threaded portion 110 of the first conduit 104 and the length L₂ of the threaded portion 106 of the second conduit 106 have a combined length that is greater than the length L₅ of the non-threaded central portion 118, the first conduit 104 and the second conduit 106 are incapable of both being inserted too far into the coupling nut 108. Accordingly, the first conduit 104 and the second conduit 106 can both be fully secured with the coupling nut 108 in an abutting configuration without either the first conduit 104 or the second conduit 106 being inserted too far into the coupling nut 108, as illustrated in FIG. 2. If one of the first conduit 104 or the second conduit 106 is inserted too far into the coupling nut 108, the other of the first conduit 104 or the second conduit 106 will push the conduit that is inserted to far back into the respective threading of the coupling nut 108.

In one embodiment, a coupling nut is provided with left handed female threads on one side and right handed female threads on the other with a non-threaded portion in the center. The nut may be used to pull a male threaded hose and a male threaded reel together to form a tight face-seal near the center of the coupling. The length of the respective nut, hose and reel threads in relation to the non-threaded center of the nut is configured such that if either the hose or the reel male threads reach the center well before the mating part, it will disengage the thread and spin freely inside the nut until the mating component meets up to form the face seal.

Prior art configurations rely on the operator to gage that both mating parts have adequate thread engagement before forming a face seal. The embodiments described herein ensure geometrically that both mating parts always have adequate thread engagement when making the face seal. In the specific application of reel to hose connection, the hose doesn't risk disconnecting during an attempted fire extinguishing attempt.

While the invention has been illustrated and described in detail in the drawings and foregoing description, the same is to be considered as illustrative and not restrictive in character, it being understood that only certain embodiments have been shown and described and that all changes and modifications that come within the scope of the invention as defined by the appended claims are desired to be protected.

## Claims

1. A system having pressurized fluid flowing therethrough comprising:
a component (102) having a first conduit (104), wherein the component (102) discharges pressurized fluid through the first conduit (104), wherein the first conduit (104) comprises a first conduit threaded end (110) having a first length (Li);
a second conduit (106) comprising a second conduit threaded end (112) having a second length (L₂); and
a coupling nut (108) constructed and arranged to join the first conduit (104) and the second conduit (106), the coupling nut (108) comprising:
a first end (124);
a second end (126);
an opening (120) extending between the first end (124) and the second end (126), the opening (120) having an interior surface (122);
a first coupling nut thread (114) extending along the interior surface (122) at the first end (124) and constructed and arranged to receive the first conduit threaded end (110);
a second coupling nut thread (116) extending along the interior surface (122) at the second end (126) and constructed and arranged to receive the second conduit threaded end (112); and
a non-threaded central portion (118) extending between the first coupling nut thread (114) and the second coupling nut thread (116), the non-threaded central portion (118) having a third length (L₅), wherein the third length (L₅) of the non-threaded central portion (118) is less than the sum of the first length (L₁) of the first conduit threaded end (110) and the second length (L₂) of the second conduit threaded end (112);
wherein the third length (L₅) is greater than the first length (L₁); and
wherein the third length (L₅) is greater than the second length (L₂);
**characterised in that**
if the first conduit (104) is inserted into the coupling nut (108) too far, the first conduit threaded end (110) will become positioned within the non-threaded central portion (118) of the coupling nut (108) so that the first conduit (104) will rotate freely with respect to the coupling nut (108); and/or
if the second conduit (106) is inserted into the coupling nut (108) too far, the second conduit threaded end (112) will become positioned within the non-threaded central portion (118) of the coupling nut (108) so that the second conduit (106) will rotate freely with respect to the coupling nut (108).

2. The system of claim 1, wherein the first length (L₁) is equal to the second length (L₂).

3. The system of claim 1, wherein the first coupling nut thread (114) is threaded in an opposite direction of the second coupling nut thread (116).

4. The system of claim 1, wherein:
the first coupling nut thread (114) comprises a right-hand thread; and
the second coupling nut thread (116) comprises a left-hand thread.

5. The system of claim 1, wherein:
the first coupling nut thread (114) comprises a left-hand thread; and
the second coupling nut thread (116) comprises a right-hand thread.

## Patentansprüche

1. System, das ein druckbeaufschlagtes Fluid hindurchfließend aufweist, umfassend:
eine Komponente (102), die eine erste Leitung (104) aufweist, wobei die Komponente (102) druckbeaufschlagtes Fluid durch die erste Leitung (104) entlädt, wobei die erste Leitung (104) ein erstes Leitungsgewindeende (110) umfasst, das eine erste Länge (L₁) aufweist;
eine zweite Leitung (106), die ein zweites Leitungsgewindeende (112) umfasst, das eine zweite Länge (L₂) aufweist; und
eine Kopplungsmutter (108), die konstruiert und eingerichtet ist, die erste Leitung (104) und die zweite Leitung (106) zu verbinden, wobei die Kopplungsmutter (108) umfasst:
ein erstes Ende (124);
ein zweites Ende (126);
eine Öffnung (120), die sich zwischen dem ersten Ende (124) und dem zweiten Ende (126) erstreckt, wobei die Öffnung (120) eine Innenoberfläche (122) aufweist;
ein erstes Kopplungsmuttergewinde (114), das sich entlang der Innenoberfläche (122) bei dem ersten Ende (124) erstreckt und konstruiert und eingerichtet ist, das erste Leitungsgewindeende (110) aufzunehmen;
ein zweites Kopplungsmuttergewinde (116), das sich entlang der Innenoberfläche (122) bei dem zweiten Ende (126) erstreckt und konstruiert und eingerichtet ist, das zweite Leitungsgewindeende (112) aufzunehmen; und
einen gewindelosen Mittelabschnitt (118), der sich zwischen dem ersten Kopplungsmuttergewinde (114) und dem zweiten Kopplungsmuttergewinde (116) erstreckt, wobei der gewindelose Mittelabschnitt (118) eine dritte Länge (L₅) aufweist, wobei die dritte Länge (L₅) des gewindelosen Mittelabschnitts (118) geringer als die Summe der ersten Länge (L₁) des ersten Leitungsgewindeendes (110) und der zweiten Länge (L₂) des zweiten Leitungsgewindeendes (112) ist;
wobei die dritte Länge (L₅) größer als die erste Länge (L₁) ist; und
wobei die dritte Länge (L₅) größer als die zweite Länge (L₂) ist;
**dadurch gekennzeichnet, dass**
falls die erste Leitung (104) zu weit in die Kopplungsmutter (108) eingesetzt wird, das erste Leitungsgewindeende (110) innerhalb des gewindelosen Mittelabschnitts (118) der Kopplungsmutter (108) so positioniert wird, dass die erste Leitung (104) in Bezug auf die Kopplungsmutter (108) frei rotieren wird; und/oder
falls die zweite Leitung (106) zu weit in die Kopplungsmutter (108) eingesetzt wird, das zweite Leitungsgewindeende (112) innerhalb des gewindelosen Mittelabschnitts (118) der Kopplungsmutter (108) so positioniert wird, dass die zweite Leitung (106) in Bezug auf die Kopplungsmutter (108) frei rotieren wird.

2. System nach Anspruch 1, wobei die erste Länge (L₁) gleich der zweiten Länge (L₂) ist.

3. System nach Anspruch 1, wobei das erste Kopplungsmuttergewinde (114) in einer entgegengesetzten Richtung zu dem zweiten Kopplungsmuttergewinde (116) gewunden ist.

4. System nach Anspruch 1, wobei:
das erste Kopplungsmuttergewinde (114) ein rechtsdrehendes Gewinde umfasst; und
das zweite Kopplungsmuttergewinde (116) ein linksdrehendes Gewinde umfasst.

5. System nach Anspruch 1, wobei:
das erste Kopplungsmuttergewinde (114) ein linksdrehendes Gewinde umfasst; und
das zweite Kopplungsmuttergewinde (116) ein rechtsdrehendes Gewinde umfasst.

## Revendications

1. Système présentant du fluide sous pression s'écoulant à travers celui-ci comprenant:
un composant (102) présentant un premier conduit (104), dans lequel le composant (102) évacue du fluide sous pression à travers le premier conduit (104), dans lequel le premier conduit (104) comprend une extrémité filetée de premier conduit (110) présentant une première longueur (L₁) ;
un second conduit (106) comprenant une extrémité filetée de second conduit (112) présentant une deuxième longueur (L₂) ; et
un écrou de couplage (108) construit et agencé pour joindre le premier conduit (104) et le second conduit (106), l'écrou de couplage (108) comprenant :
une première extrémité (124) ;
une seconde extrémité (126) ;
une ouverture (120) s'étendant entre la première extrémité (124) et la seconde extrémité (126), l'ouverture (120) présentant une surface intérieure (122) ;
un premier filet d'écrou de couplage (114) s'étendant le long de la surface intérieure (122) à la première extrémité (124) et construit et agencé pour recevoir l'extrémité filetée de premier conduit (110) ;
un second filet d'écrou de couplage (116) s'étendant le long de la surface intérieure (122) à la seconde extrémité (126) et construit et agencé pour recevoir l'extrémité filetée de second conduit (112) ; et
une portion centrale non filetée (118) s'étendant entre le premier filet d'écrou de couplage (114) et le second filet d'écrou de couplage (116), la portion centrale non filetée (118) présentant une troisième longueur (L₅), dans lequel la troisième longueur (L₅) de la portion centrale non filetée (118) est inférieure à la somme de la première longueur (L₁) de l'extrémité filetée de premier conduit (110) et de la deuxième longueur (L₂) de l'extrémité filetée de second conduit (112) ;
dans lequel la troisième longueur (L₅) est supérieure à la première longueur (L₁) ; et
dans lequel la troisième longueur (L₅) est supérieure à la deuxième longueur (L₂) ;
**caractérisé en ce que**
si le premier conduit (104) est inséré trop loin dans l'écrou de couplage (108), l'extrémité filetée de premier conduit (110) sera positionnée dans la portion centrale non filetée (118) de l'écrou de couplage (108) de sorte que le premier conduit (104) va tourner librement par rapport à l'écrou de couplage (108) ; et/ou
si le second conduit (106) est inséré trop loin dans l'écrou de couplage (108), l'extrémité filetée de second conduit (112) sera positionnée dans la portion centrale non filetée (118) de l'écrou de couplage (108) de sorte que le second conduit (106) va tourner librement par rapport à l'écrou de couplage (108).

2. Système selon la revendication 1, dans lequel la première longueur (L₁) est égale à la deuxième longueur (L₂).

3. Système selon la revendication 1, dans lequel le premier filet d'écrou de couplage (114) est fileté dans une direction opposée du second filet d'écrou de couplage (116).

4. Système selon la revendication 1, dans lequel :
le premier filet d'écrou de couplage (114) comprend un filet à droite ; et
le second filet d'écrou de couplage (116) comprend un filet à gauche.

5. Système selon la revendication 1, dans lequel :
le premier filet d'écrou de couplage (114) comprend un filet à gauche ; et
le second filet d'écrou de couplage (116) comprend un filet à droite.
